# EUROPÄISCHE PATENTSCHRIFT

(11) **EP 0 879 182 B1**
(45) Veröffentlichungstag und Bekanntmachung des Hinweises auf die Patenterteilung: **13.10.1999**
(21) Anmeldenummer: 97900067.6
(22) Anmeldetag: 13.01.1997
(51) Int. Cl.: B65D 51/16, B65D 1/02

(54) **BEHÄLTERFINISH UND VERSCHLUSSKAPPE MIT 2-GÄNGIGEM GEWINDE**
BOTTLE FINISH AND CLOSURE CAP WITH DOUBLE SCREW THREAD
GOULOT D'UN RECIPIENT ET COIFFE DE FERMETURE A FILETAGE A DOUBLE PAS

(30) Priorität: 30.01.1996 CH 23696; 19.11.1996 CH 285396
(43) Veröffentlichungstag der Anmeldung: 25.11.1998
(73) Patentinhaber: Crown Cork AG, 4153 Reinach (CH)
(72) Erfinder: DREYER, Lino, F-68300 Saint-Louis (FR); JAUSLIN, Richard, CH-4144 Arlesheim (CH)
(74) Vertreter: Hepp, Dieter
(86) Internationale Anmeldenummer: CH9700009
(87) Internationale Veröffentlichungsnummer: WO9728057

(56) Entgegenhaltungen:
- EP-A- 0 009 854
- EP-A- 0 263 699
- WO-A-95/05322
- DE-U- 9 112 577
- GB-A- 2 275 047
- US-A- 4 392 055
- US-A- 4 948 001
- US-A- 5 462 186

## Beschreibung

Die Erfindung betrifft einen Behälterfinish und eine Verschlusskappe mit 2-gängigem Gewinde gemäss dem Oberbegriff der unabhängigen Ansprüche.

Es sind verschiedene Verschlussanordnungen mit mehrgängigen Gewinden an Verschluss und Behälterfinish bekannt. Die US 4,770,306 zeigt beispielsweise einen Verschluss, der ein 2-gängiges Gewinde aufweist. Jeder Gewindegang erstreckt sich über einen Winkel von ungefähr 180° und die beiden Gewindegänge sind diametral gegenüber versetzt. Ein Vorteil von solchen zwei- oder mehrgängigen Gewinden besteht darin, dass der Eingriff zwischen den Gewindegängen des Verschlusses und des Behälterhalses vergleichsweise grösser ist als bei eingängigen Gewinden. Dies ermöglicht, kürzere Gewindegänge vorzusehen, woraus sich ein wesentlich kürzerer Öffnungs- oder Schliessweg des Verschlusses ergibt.

Bei Behältern, die mit kohlensäurehaltigen Getränken gefüllt werden, herrscht bei geschlossenem Behälter ein erhöhter Innendruck. Es soll vermieden werden, dass beim Õffnen des Behälters der Verschluss aufgrund des erhöhten Innendrucks vom Behälterhals abspringt, bevor der Innendruck abgebaut ist. Dies birgt die Gefahr von Verletzungen des Konsumenten.

Auch bei Behältern oder Verschlüssen, welche mit Mitteln zum Lüften des Verschlusses beim Abschrauben versehen sind, bestehen gewisse Risiken, wenn durch den Benutzer Missbrauch betrieben wird. Es ist denkbar, Verschlüsse von Behältern mit kohlesäurehaltigen Getränken durch bewusst schnelles Drehen so schnell zu entfernen, dass die Zeit zum Entlüften trotz im allgemeinen ausreichenden Lüftungsanordnungen zu kurz ist. Geschossartig abspringende Verschlüsse können so willentlich herbeigeführt werden.

Aus US 5 462 186 ist ein Verschluss mit zwei um 180° versetzten Gewindegängen und mit diese durchschneidenden Entlüftungsschlitzen bekannt. Die Gewindegänge erstrecken sich je über mehr als 360°, so dass in Umfangsrichtung gesehen immer wenigstens zwei Gewindegänge übereinander liegen.

Die Erfindung stellt sich zur Aufgabe, die Nachteile des Bekannten zu vermeiden, insbesondere einen Behälterfinish und eine Verschlusskappe mit mehrgängigem Gewinde zu schaffen, welche verbesserte Entlüftungseigenschaften zum Abbau des Innendrucks während des Öffnungsvorgangs von Behältern mit kohlensäurehaltigen Getränken aufweist.

Eine weitere Aufgabe der vorliegenden Erfindung besteht darin, einen Behälterfinish und eine Verschlusskappe zu schaffen, welche ein vom Benutzer herbeigeführtes zu schnelles Aufdrehen und Abspringen des Verschlusses verhindern.

Eine weitere Aufgabe der Erfindung besteht darin, einen Verschluss und einen Behälterfinish zu schaffen, die ökonomisch herstellbar sind, insbesondere wenig Material benötigen und die in geschlossenem Zustand zuverlässig in Eingriff miteinander stehen.

Erfindungsgemäss werden diese Aufgaben mit einem Verschluss und einem Behälterfinish gemäss dem kennzeichnenden Teil der unabhängigen Patentansprüche gelöst.

Ein Behälterfinish weist eine im wesentlichen zylindrische Aussenfläche auf, an welcher zwei nach aussen vorstehende Gewindegänge um 180° versetzt angeordnet sind. Eine derartige, um 180° versetzte Anordnung verhindert, dass der Verschluss beim Öffnen verkantet oder einseitig öffnet und vom Finish abspringt. Die Verteilung der vom Behälterfinish auf einen Verschluss wirkenden Kraft ist bei einer solchen Anordnung punktsymmetrisch und diagonal gegenüberliegend, so dass die Gefahr eines frühzeitigen und einseitigen Abspringens verkleinert wird.

Die Gewindegänge sind durch Entlüftungsaussparungen unterbrochen. Die Entlüftungsaussparungen erlauben den Abbau eines erhöhten Innendrucks im Behälter während des Öffnungsvorgangs zu einem Zeitpunkt, bei welchem ein Verschluss noch in festem Eingriff mit dem Behälterfinish steht.

Jeder Gewindegang erstreckt sich vorzugsweise über einen Winkel von 240° bis kleiner als 360°, vorzugsweise bis 340°. Die Auswahl eines solchen Winkelbereichs ergibt in Kombination mit einer geeigneten Wahl der Entlüftungsaussparungen ein optimales Entlüftungsverhalten sowie einen sicheren Form- und Kraftschluss zwischen dem Finish und einem Verschluss.

Die minimale Gewindelänge von 240° ist notwendig, um einen ausreichenden Überdrehwert sicherzustellen.

Durch die Wahl eines Winkels zwischen 240° und 340° ergeben sich Zwei erste Abschnitte der Aussenfläche, in welchen sich die beiden Gewindegänge vertikal überlappen und zwei zweite Abschnitte der Aussenfläche, in welchen vertikal nur je ein Gewindegang angeordnet ist.

Ein gutes Entlüftungsverhalten wird dadurch erreicht, dass in jedem ersten Abschnitt pro Gewindegang wenigstens eine zur Entlüftungsaussparung des anderen Gewindegangs ausgerichtete Entlüftungsaussparung angeordnet ist, und dass in jedem zweiten Abschnitt wenigstens eine Entlüftungsaussparung angeordnet ist. Die Ausrichtung der Entlüftungsaussparungen oder "Slots" bedingt vorteilhaft eine vertikal fluchtende Anordnung. Ein seitlicher Versatz der übereinanderliegenden "Slots" ist möglich, solange dadurch der freie Durchlass für das austretende Gas nicht wesentlich reduziert wird.

In einem besonders bevorzugten Ausführungsbeispiel erstreckt sich ein jeder Gewindegang über einen Winkel von 280°. Vorteilhaft wird genau eine Entlüftungsaussparung pro Abschnitt verwendet.

Ein besonders günstiges Gas-Ablassverhalten ergibt sich ausserdem durch eine unregelmässige (nicht axialsymmetrische) Anordnung der einzelnen Entlüftungsaussparungen.

Die einzelnen Entlüftungsaussparungen werden vorzugsweise sich radial nach innen verjüngend ausgebildet. Der Öffnungswinkel beträgt zwischen 40° und 70°, vorzugsweise zwischen 55° und 65° und jede Entlüftungsaussparung erstreckt sich über einen Winkelbereich von 4° bis 10°, vorzugsweise etwa 5°.

Eine optimale Steigung des Gewindes liegt in dem Bereich zwischen 3° und 4°, vorzugsweise bei etwa 3,5°.

Unterhalb der beiden Gewindegänge weist der Behälterfinish auf seiner Aussenfläche bevorzugt einen Rückhaltewulst zum Halten eines Garantiebands eines Verschlusses auf. Die Wahl der Distanz zwischen dem Rückhalteelement und dem Gewindeende im Verhältnis zur axialen Ausdehnung der beiden Gewindegänge ist für das Õffnungsverhalten von Bedeutung. Die Distanz zwischen Rückhaltewulst und dem Gewindeende wird kleiner als das Eineinhalbfache, vorteilhaft gleich zwei Drittel der vertikalen Ausdehnung des mit Gewindegängen versehenen Abschnitts des Behälterfinish gewählt. Das Gas sucht seinen Weg vom Gewindeende bis zum Ende der Verschlusskappe zwischen der Innenseite des Verschlusses und der Aussenseite der Behältermündung.

Je länger die Distanz zwischen Gewindeende des Behälters und Rückhaltewulst ist, umso länger muss auch die Distanz zwischen dem Gewindeende des Verschlusses und einem Garantieband gewählt werden. Der Durchgangsweg des Gases wird länger und dem austretenden Gas wird ein erhöhter Widerstand entgegengesetzt.

Aus der Wahl eines grösseren Abstandes resultiert also ein verschlechtertes Gas-Ablassverhalten.

Ein erfindungsgemässer Verschluss besteht im wesentlichen aus einem Boden und einer daran befestigten umlaufenden Schürze, welche eine im wesentlichen zylindrische Innenfläche aufweist. Auf der Innenfläche sind zwei radial nach innen vorstehende Gewindegänge um 180° versetzt angeordnet. Auf der Innenseite sind ausserdem Entlüftungsaussparungen vorgesehen, welche die Gewindegänge unterbrechen.

Die beiden Gewindegänge erstrecken sich vorteilhaft über einen Winkel von 240° bis kleiner als 360°, vorzugsweise bis 340°. Durch die diametral entgegengesetzte Anordnung der beiden Gewindegänge ergeben sich zwei erste Abschnitte der Innenfläche, in welchen sich die beiden Gewindegänge vertikal überlappen und zwei zweite Abschnitte der Innenfläche, in welchen vertikal nur je ein Gewindegang angeordnet ist.

In jedem der ersten Abschnitte ist pro Gewindegang wenigstens eine zur Entlüftungsaussparung des anderen Gewindegangs ausgerichtete Entlüftungsanordnung vorgesehen. In jedem zweiten Abschnitt ist ebenfalls wenigstens eine Entlüftungsaussparung vorgesehen.

Vorzugsweise erstreckt sich ein jeder Gewindegang über einen Winkel von etwa 280°.

Ein besonders günstiges Öffnungsverhalten für einen Verschluss in Verbindung mit dem vorangehend beschriebenen Behälterfinish ergibt sich, wenn in jedem ersten Abschnitt pro Gewindegang zwei Entlüftungsaussparungen und in jedem ersten Abschnitt eine Entlüftungsaussparung angeordnet sind.

Ein gutes Gas-Ablassverhalten ergibt sich ausserdem auch dadurch, dass die einzelnen Entlüftungsaussparungen unregelmässig, d.h. nicht axialsymmetrisch, angeordnet werden.

Die Entlüftungsaussparungen erstrecken sich vorteilhaft über einen Winkelbereich von 4° bis 10°, vorzugsweise 5°.

In einem besonders bevorzugten Ausführungsbeispiel ist der Verschluss ausserdem-mit einem Garantieband versehen. Das Garantieband ist mittels Sollbruchstegen oder einer Sollreisslinie mit dem unteren Rand der umlaufenden Schürze des Verschlusses verbunden. Das Garantieband weist an seiner Innenseite Rückhaltemittel auf, welche mit einem Rückhaltewulst eines Behälterhalses in Eingriff bringbar sind. Da zwei Gewindegänge verwendet werden, kann ihre Steigung im Vergleich zu eingängigen Gewinden gross gewählt werden, ohne dass der Eingriff zwischen dem Verschluss und einem Behälterfinish zu klein wird. So kann beispielsweise ein Steigungswinkel von 3° bis 4°, vorzugsweise 3,5° gewählt werden. Ein solcher steiler Gewindegang bedeutet aber auch, dass die beim Öffnungsvorgang auf das Garantieband wirkenden Kräfte in kürzerer Zeit ausgeübt werden. Die Zuverlässigkeit, dass ein Garantieband beim erstmaligen Öffnen eines Verschlusses reisst, wird durch die Wahl von solch steilen Gewinden erhöht.

Optimal ist eine Kombination des vorangehend beschriebenen Behälterfinish mit dem beschriebenen Verschluss. Die beiden Gewindegänge des Verschlusses treten rasch mit den Gewindegängen des Behälterfinish in Eingriff. Weil zwei Gewindeeinläufe diametral entgegengesetzt angeordnet sind, muss beim Aufschrauben des Verschlusses höchstens eine halbe Drehung gemacht werden, bis der Verschluss mit dem Behälterfinish in Eingriff gelangt. Bei eingängigen Verschlüssen ist dazu im schlimmsten Fall eine ganze Umdrehung nötig.

In einem bevorzugten Ausführungsbeispiel sind der Verschluss und der Behälterfinish in einem Winkelbereich von 300° bis 390° in Eingriff miteinander. Dank der zwei Gewindegänge ist dies möglich, auch wenn jeder Gewindegang sich nur über einen Winkelbereich von 240° bis kleiner als 360° erstreckt. Bevorzugt wird ein gegenseitiger Eingriff über 360° gewählt. Durch die spezifische Anordnung der einzelnen Entlüftungsaussparungen wird eine sequentielle, lange andauernde Entlüftung erreicht. Bevorzugt sind am Behälterfinish vier durchlaufende und am Verschluss sechs durchlaufende Entlüftungsaussparungen angebracht. Wenn die Aussparungen asymmetrisch und am Behälterrand und am Verschluss nicht in gleichen Winkelabständen angeordnet sind, ergeben sich beim Abschraubvorgang während einer Umdrehung (Eingriff 360°) 24 Konstellationen, bei welchen Entlüftungsaussparungen des Verschlusses Entlüftungsaussparungen des Behälterfinish treffen. Während des ganzen Abschraubvorgangs wird also sequentiell zu 24 Zeitpunkten mit einem maximalen Wert entlüftet. Im Gegensatz dazu findet bei Verschlüssen mit konventionellen eingängigen Gewinden und Entlüftungsaussparungen eine Entlüftung zu deutlich weniger verschiedenen Zeitpunkten statt.

Um eine gute Entlüftung zu gewährleisten, muss in jeder der zweiten Abschnitte, wo vertikal nur ein Gewindegang angeordnet ist, wenigstens eine Entlüftungsaussparung vorgesehen sein. Da das ausströmende Gas einen kleineren Widerstand (nur einen statt zwei Gewindegänge) vorfindet, kann es viel schneller ausströmen. Mit eingängigen Gewinden ist eine Anordnung, bei welcher an einer Stelle vertikal nur ein Gewindegang angeordnet ist, aus Gründen der Sicherheit (zu kleiner gegenseitiger Eingriff) nicht denkbar.

Es ist ausserdem vorteilhaft, Verschluss und Behälter derart zu konstruieren, dass der Abstand zwischen dem der Innenseite des Verschlussbodens und der dem Verschlussboden zugewandten Seite der Enden der Gewindegänge grösser gewählt wird, als der Abstand zwischen dem Rand der Behältermündung und der oberen Seite des Gewindeeinlaufs der Gewindegänge am Behälterfinish.

In einem weiteren bevorzugten Ausführungsbeispiel ist der Gewindeeinlauf der Gewindegänge am Behälterfinish nicht abgerundet, sondern vertikal abgeschnitten. Im Zusammenhang mit einem Bremselement am Ende der Gewindegänge des Verschlusses wird so eine Bremsanordnung gebildet, welche die Aufschraubbewegung des Verschlusses genau definiert und begrenzt.

In einem weiteren vorteilhaften Ausführungsbeispiel sind der Behälterfinish und/oder die Verschlusskappe mit zusätzlichen Mitteln zum Bremsen der Abschraubbewegung versehen. Sowohl der Behälterfinish als auch die Verschlusskappe können mit für sich alleine wirkenden Mitteln versehen sein. Es ist aber auch denkbar, Behälterfinish und Verschluss mit gegenseitig in Eingriff tretenden Mitteln zu versehen. Sobald die Lüftungsfunktion einsetzt, wird die Abschraubbewegung des Verschlusses gebremst. Dadurch steht zum Entlüften eine grössere Zeitspanne zur Verfügung. Dies vermeidet einAbspringen des Verschlusses auch bei unsachgemässer Behandlung (zu schnelles Öffnen).

Besonders einfach ist es, den Behälterfinish mit wenigstens einem, zwischen den Gewindegängen angeordneten Anschlag zu versehen, welcher bei erhöhtem Innendruck mit Elementen eines Verschlusses in Eingriff bringbar ist. Wenn der Verschluss durch den erhöhten Innendruck axial angehoben wird, treten Elemente des Verschlusses mit dem Anschlag an der Behältermündung in Eingriff und verhindern eine weitere Abschraubbewegung. Sobald sich der Innendruck im Behälter durch Abblasen reduziert hat, kann der Verschluss in axialer Richtung nach unten gedrückt werden, wodurch die Elemente des Verschlusses ausser Eingriff mit dem Anschlag treten. Die in Eingriff mit dem Anschlag an der Behältermündung tretenden Elemente des Verschlusses können beispielsweise die Unterbrechungen des Gewindegänge, d.h. die Lüftungsaussparungen sein.

Eine ähnliche Anordnung von Anschlägen kann selbstverständlich auch auf der Innenseite der Verschlusskappe angebracht werden. Dabei werden auf der dem Kappenboden zugewandten Seite der Gewindegänge Anschläge angebracht, welche bei durch Innendruck angehobener Verschlusskappe mit Elementen der Behältermündung, insbesondere den Gewindegängen auf der Behältermündung in Eingriff treten können.

Es ist ausserdem denkbar, Bremselemente vorzusehen, die die Abschraubbewegung nicht unterbrechen, sondern gleichmässig bremsen. Diese gleichmässige Bremswirkung ist für den Benutzer praktisch, da sie weniger offensichtlich ist und keine zusätzliche Bewegung wie axiales Herunterdrücken des Verschlusses erfordert. In einem besonders einfachen Ausführungsbeispiel können zum kontinuierlichen Bremsen Vorsprünge auf der Innenfläche der Schürze vorGesehen werden. Diese Vorsprünge erstrecken sich in radialer Richtung etwa so weit nach innen, dass sie in schleifenden Kontakt mit dem maximalen Aussendurchmesser der Behältermündung, d.h. mit dem Aussendurchmesser der Gewinde in Eingriff treten. Diese Vorsprünge können beispielsweise gegen den unteren Rand der Schürze hin angeordnet werden, so dass sie erst nach einem gewissen Aufschraubweg in Eingriff mit den Gewindegängen der Behältermündung treten und eine Bremswirkung erzeugen. Die Verschlusskappe kann also in einem ersten Öffnungsschritt ungebremst aufgedreht werden. Erst in einem weiteren Schritt, wenn der Verschluss lüftet, werden die Bremselemente aktiv.

In einem besonders vorteilhaften Ausführungsbeispiel sind die Vorsprünge ausserdem in axialer Richtung gegen den Kappenboden hin mit einer in radialer Richtung abnehmenden Dicke versehen. Dies führt zu einer sich stetig erhöhenden Bremskraft gegen den Schluss der Abschraubbewegung hin.

Ähnliche Vorteile lassen sich auch mit einem Vorsprung erzielen, der sich im wesentlichen über die ganze Höhe der Gewindegänge erstreckt und vorzugsweise benachbart zum unteren Rand der Schürze endet.

In einem weiteren Ausführungsbeispiel ist die Innenfläche der Kappenschürze zwischen den Gewindegängen mit brückenartigen Vorsprüngen versehen, welche die Bremswirkung erzeugen.

Selbstverständlich können die für einen Verschluss dargestellten Bremselemente in ähnlicher Wirkungsweise jeweils auch auf eine Behältermündung übertragen werden. Entsprechend der anderen Wirkungsweise bei am Behälter angebrachten Vorsprüngen müssen die Vorsprünge höchstens etwas anders positioniert oder geformt werden. Insbesondere bei Vorsprüngen mit sich in axialer Richtung verändernden Dicke werden die Vorsprünge bevorzugt benachbart zum Rand der Mündung angeordnet und weisen eine Dicke auf, die sich in axialer Richtung zu der Behälterkante hin reduziert.

Die gezeigten Vorrichtungen zum Bremsen der Abschraubbewegung weisen auch im Zusammenhang mit nicht zweigängigen Gewinden grosse Vorteile auf. Es kann bei jedem Gewindedesign von abblasbaren Verschlüssen von Vorteil sein, die Abschraubbewegung mit solchen Elementen zu bremsen.

Die Erfindung wird im folgenden Anhand der Zeichnungen und in Ausführungsbeispielen näher erläutert. Es zeigen:
- Figur 1: eine dreidimensionale Ansicht eines erfindungsgemässen Behälterfinishs,
- Figur 2: eine dreidimensionale Darstellung der Gewindegänge eines erfindungsgemässen Verschlusses, mit angedeuteter Verschlussschürze,
- Figur 3: eine dreidimensionale Schnittdarstellung einer erfindungsgemässen Kombination eines Verschlusses und eines Behälterfinishs,
- Figur 4: eine Seitenansicht des Behälterfinishs von Figur 1,
- Figur 5: eine Abwicklung der Innenseite des Verschlusses von Figur 2,
- Figur 6: eine Abwicklung der Aussenfläche des Behälterfinish von Figur 1,
- Figur 7: einen Querschnitt durch den Verschluss von Figur 2,
- Figuren 8 und 9: Abwicklungen von alternativen Ausführungsbeispielen eines Verschlusses und eines Behälterfinishs,
- Figuren 10 und 11: Abwicklungen der Innenseite eines Verschlusses mit Mitteln zum Bremsen der Abschraubbewegung,
- Figur 12: eine Abwicklung der Aussenfläche eines Behälterfinishs mit Mitteln zum Bremsen der Abschraubbewegung eines Verschlusses,
- Figur 13: eine Abwicklung der Innenfläche eines Verschlusses mit einem alternativen Ausführungsbeispiel von Mitteln zum Bremsen der Abschraubbewegung,
- Figur 14: einen Querschnitt durch einen Verschluss gemäss der Abwicklung von Figur 13,
- Figuren 15a und 15b: die Abwicklung von Figur 10 mit angedeutetem Gewinde einer Behältermündung in zwei Etappen eines Öffnungsvorgangs, und
- Figuren 16a und 16b: einen Querschnitt einer auf einen Behälter aufgesetzten Verschlusskappe gemäss Figur 14 während zwei Etappen eines Öffnungsvorgangs.

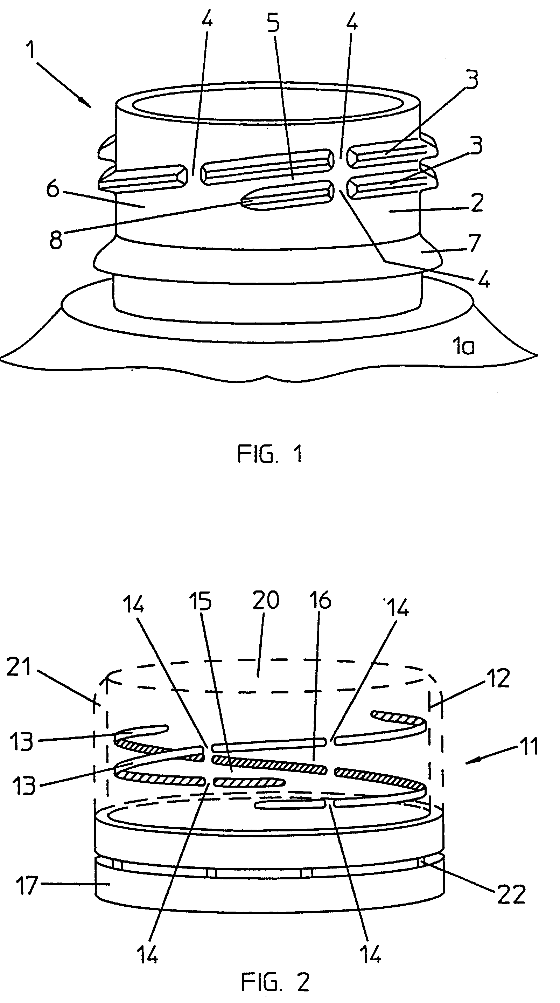

Figur 1 zeigt einen Behälterfinish 1 mit den Merkmalen der Erfindung.

Der Finish 1 eines nicht näher dargestellten Behälters 1a weist eine Aussenfläche 2 auf, auf welcher zwei Gewindegänge 3 angeordnet sind. Die beiden Gewindegänge 3 sind um 180° versetzt angeordnet und erstrecken sich je über 280°. Auf diese Weise werden zwei erste Abschnitte 5 gebildet, in welchen sich die Gewindegänge 3 vertikal überlappen. Dagegen ist in zwei zweiten Abschnitte 6 nur ein Gewindegang 3 angeordnet. Um schnellen Druckablass beim Entfernen eines Verschlusses vom Behälterfinish 1 zu ermöglichen, sind die Gewindegänge 3 durch Entlüftungsaussparungen 4 unterbrochen. In jedem der Abschnitte 5 oder 6 ist pro Gewindegang 3 eine Entlüftungsaussparung 4 angebracht. In den Abschnitten 5, in welchen sich die beiden Gewindegänge 3 überlappen, sind die Aussparungen vertikal aufeinander ausgerichtet. Der Behälterfinish 1 weist ausserdem einen Rückhaltewulst 7 auf, der mit dem Garantieband eines Verschlusses in Eingriff bringbar ist.

Figur 2 zeigt den Gewindeverlauf eines Verschlusses 11 mit den erfindungsgemässen Merkmalen. Der Verschluss weist einen Boden 20 und eine daran befestigte, umlaufende Schürze 21 auf. Auf der Innenfläche 12 der umlaufenden Schürze 21 sind zwei radial nach innen vorstehende Gewindegänge 13 angeordnet. Die beiden Gewindegänge 13 sind um 180° zueinander versetzt auf der Innenfläche 12 angebracht. Jeder Gewindegang 13 erstreckt sich über einen Winkel von 280°, so dass erste Abschnitte 15, in welchen zwei Gewindegänge 13 vertikal übereinander liegen und zweite Abschnitte 16, in welchen vertikal nur ein Gewindegang 13 liegt, gebildet werden. In jedem dieser Abschnitte 15, 16 ist jeder Gewindegang an einer Stelle durch eine Entlüftungsaussparung 14 unterbrochen. In den ersten Abschnitten 15, in welchen die beiden Gewindegänge 13 sich vertikal überlappen, sind die Entlüftungsaussparungen 14 an den einzelnen Gewindegängen 13 gegenseitig ausgerichtet. Auf diese Weise entsteht eine durchgehende Aussparung. Ein Garantieband 17 ist mittels Sollbruchstegen 22 mit dem unteren Rand der umlaufenden Schürze 21 verbunden.

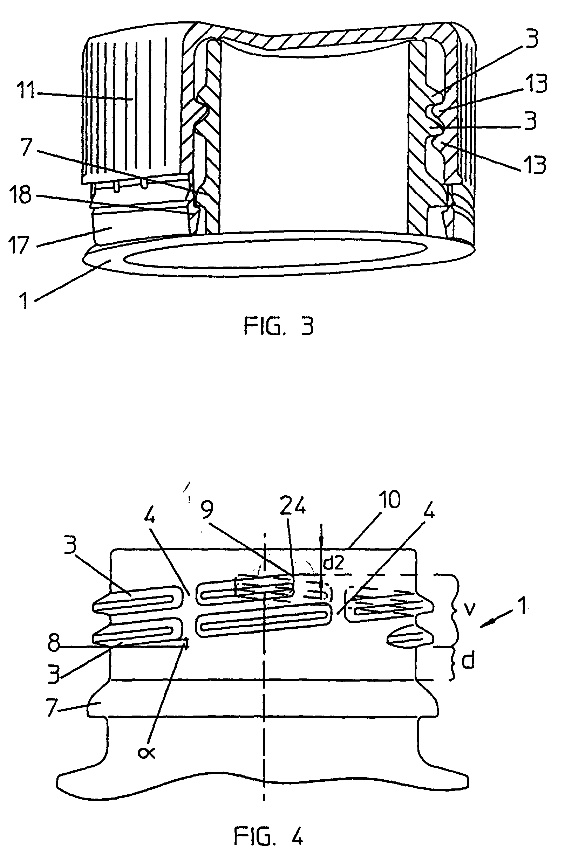

Figur 3 zeigt die Kombination eines Verschlusses 11 mit einem Behälterfinish 1 mit den erfindungsgemässen Merkmalen. Ein Teil der Schürze des Verschlusses und des Behälterfinish sind geschnitten, so dass die Darstellung teilweise einen Querschnitt zeigt. Die Gewindegänge 3 des Behälterfinish 1 stehen in Eingriff mit den Gewindegängen 13 des Verschlusses 11. Das Garantieband 17 des Verschlusses 11 wird mittels Rückhaltemitteln 18 am Rückhaltewulst 7 des Behälterfinish 1 festgehalten.

Figur 4 zeigt eine Seitenansicht des in Figur 1 dargestellten Behälterfinishs 1. Die beiden Gewindegänge 3 sind mit einer Steigung α angeordnet, wobei α vorteilhaft 3,5° beträgt. Die beiden Gewindegänge 3 werden durch Entlüftungsaussparungen 4 unterbrochen und enden gegen die Behältermündung in einem Gewindeeinlauf 9. Der Gewindeeinlauf 9 weist eine klar geschnittene Kante 24 zum Bilden einer Begrenzung der Aufschraubbewegung auf. Zwischen der oberen Seite des Gewindeeinlaufs 9 und dem Rand 10 des Behälters wird eine Distanz d2 gebildet. Zwischen der unteren Seite des Gewindeendes 8 und der oberen Seite des Rückhaltewulstes 7 wird eine zweite Distanz d gebildet. Die Distanz d beträgt ungefähr zwei Drittel der vertikalen Ausdehnung v des mit Gewindegängen versehenen Abschnitts des Behälterfinish 1.

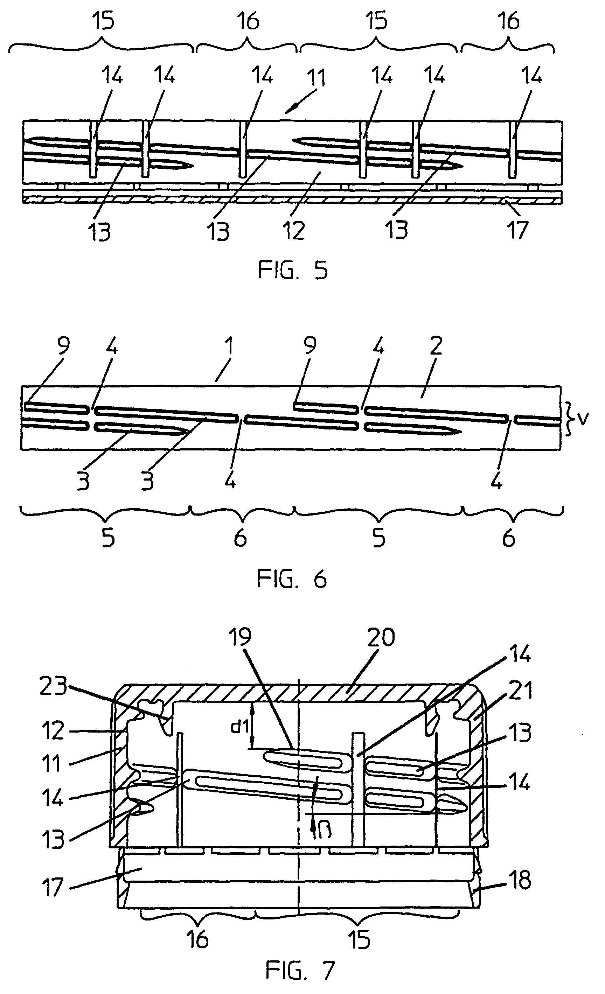

Figuren 5 und 6 zeigen Abwicklungen der Innenfläche 12 des Verschlusses 11 (Figur 5) und der Aussenfläche 2 des Behälterfinish 1 (Figur 6). Auf der Innenfläche 12 des Verschlusses 11 werden je zwei Abschnitte 15, in welchen sich die Gewindegänge 13 vertikal überlappen und zwei Abschnitte 16, in welchen vertikal nur ein Gewindegang 13 angeordnet ist, gebildet. In den Abschnitten 16 ist eine Entlüftungsaussparung 14 vorgesehen, welche den Gewindegang 13 unterbricht. In den Abschnitten 15 sind pro Gewindegang 13 je zwei Entlüftungsaussparungen 14 vorgesehen. Die Entlüftungsaussparungen 14 in den Abschnitten 15 sind derart angeordnet, dass zwei, durch beide Gewindegänge 13 durchlaufende Aussparungen erzeugt werden. Die einzelnen Entlüftungsaussparungen 14 sind in Umfangsrichtung mit unterschiedlichen Zwischenräumen angeordnet. Zur Verbesserung des Gas-Ablassverhaltens kann die Innenfläche 12 zudem im Bereich der Aussparungen 14 mit kleiner, quer über die Schürze 21 verlaufenden Vertiefungen versehen sein.

In Figur 6 wird die Abwicklung eines zum Verschluss aus Figur 5 passenden Behälterfinish 1 gezeigt. Dort wo die beiden Gewindegänge 13 sich vertikal überlappen, werden erste Abschnitte 5 gebildet. Zweite Abschnitte werden dort definiert, wo vertikal nur ein Gewindegang 3 angeordnet ist. In jedem der Abschnitte 5 oder 6 ist pro Gewindegang 3 eine Entlüftungsaussparung 4 vorgesehen, welche die Gewindegänge 3 unterbricht. In den Abschnitten 5 sind die Entlüftungsaussparungen 4 der beiden Gewindegänge 3 derart ausgerichtet, dass durchgehende Aussparungen gebildet werden. Die einzelnen Entlüftungsaussparungen 4 sind nicht regelmässig in Umfangsrichtung positioniert und decken sich nicht mit den Entlüftungsaussparungen 14 des Verschlusses 11. Beim Entfernen des Verschlusses 11 vom Behälterfinish 1 ergeben sich bei einer Umdrehung von 360° 24 Konstellationen, an welchen das im Behälter enthaltene Gas durch übereinanderliegende Entlüftungsaussparungen 4 und 14 entweichen kann.

Figur 7 zeigt einen Querschnitt durch einen Verschluss gemäss Figur 2. Der Verschluss weist vorzugsweise Dichtmittel 23 auf, welche mit dem oberen Rand eines Behälterfinish in Eingriff bringbar sind. Am Garantieband 17 sind Rückhaltemittel 18 vorgesehen, die mit einem Rückhaltewulst eines Behälterfinish in Eingriff bringbar sind. Zwischen der oberen Seite des Gewindeendes 19 und der Innenseite des Verschlussbodens wird eine Distanz d1 definiert. Wenn die Distanz d1 grösser als die Distanz d2 aus Figur 4 gewählt ist, kann bei einer Kombination von Verschluss 11 und Behälterfinish 1 ein Eingriff von mehr als 280° gewählt werden, auch wenn jeder Gewindegang 3, 13 sich nur über 280° erstreckt. Vorzugsweise wird d1 im Verhältnis d2 derart gewählt, dass der Verschluss 11 über einen Winkelbereich von 360° mit dem Behälterfinish 1 in Eingriff steht. Die Gewindegänge sind mit einem Winkel β von etwa 3,5° angeordnet.

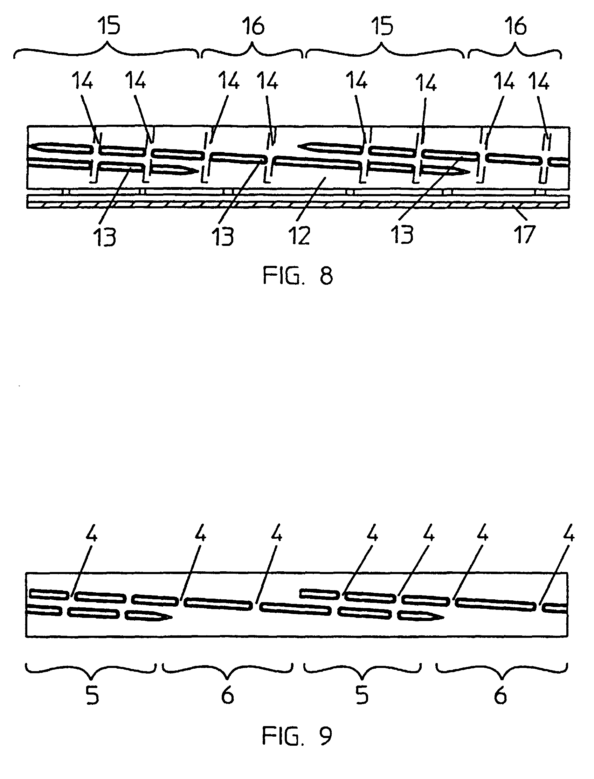

Figur 8 zeigt die Abwicklung der Innenfläche 12 eines alternativen Ausführungsbeispiels eines Verschlusses 11. In jedem der Abschnitte 16, in welchen vertikal nur ein Gewindegang 13 angeordnet ist, sind je zwei Entlüftungsaussparungen 14 vorgesehen. Dadurch ergeben sich zusätzliche Entlüftungskonstellationen beim Öffnungsvorgang und ein noch regelmässigeres Gas-Ablassverhaiten. Die Aussparungen 14 in den Abschnitten 15 sind gegenseitig fluchtend in einer zur Vertikalen leicht geneigten Linie angeordnet.

Figur 9 zeigt die Aussenflächen 2 eines alternativen Ausführungsbeispiels eines Behälterfinishs 1. Jeder Gewindegang 3 wird in jedem der Abschnitte 5, 6 von zwei Entlüftungsaussparungen 4 unterbrochen. Die Entlüftungsaussparungen 4 in den Abschnitten 5 fluchten in einer zur Vertikalen leicht geneigten Linie.

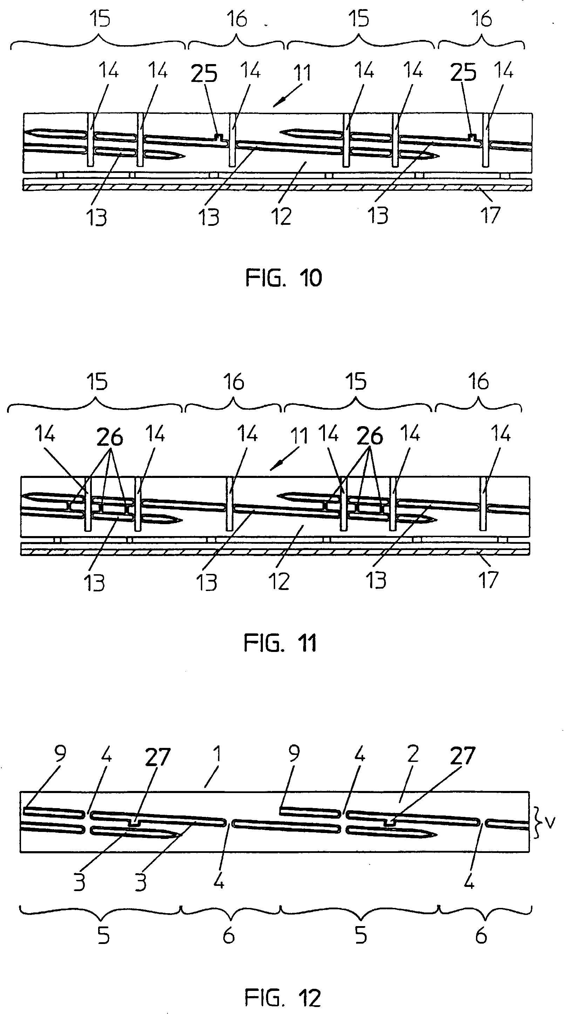

Figur 10 zeigt die Abwicklung der Innenfläche 12 eines Verschlusses 11, welcher zusätzlich mit Mitteln zum Bremsen der Abschraubbewegung des Verschlusses versehen ist. Ein Vorsprung 25 bildet eine Anschlagfläche, welche in Eingriff mit Elementen des Behälterfinishs gelangen kann und so die Abschraubbewegung zeitweise unterbricht. Bei einem hohen Innendruck in einem Behälter wird der Verschluss 11 in axialer Richtung nach oben gedrückt. Wenn der Verschluss auf einen Behälter mit Entlüftungsaussparungen aufgesetzt ist, rasten die Vorsprünge 25 bei entsprechender Dimensionierung in den Entlüftungsaussparungen am Behälterfinish ein. Selbstverständlich können auch andere Formmerkmale als Gegenstück zum Vorsprung 25 vorgesehen werden. Der Verschluss kann aufgrund der Wirkverbindung zwischen den Vorsprüngen 25 und der Behältermündung nicht weiter gedreht werden, bevor der Innendruck im Behälter abgebaut ist und der Verschluss sich axial nach unten drücken lässt. Durch eine axiale Bewegung nach unten gerät der Vorsprung 25 ausser Eingriff mit dem Behälterfinish und der Verschluss 11 lässt sich weiter absshrauben.

Figur 11 zeigt einen Verschluss 11, der an seiner Innenseite zwischen den Gewindegängen 13 mit Brücken 26 versehen ist. Die Brücken 26 sind so dimensioniert, dass sie einen freien Innendurchmesser definieren, der etwa gleich gross oder leicht kleiner als der maximale Aussendurchmesser der Gewindegänge des zu verschliessenden Behälters ist. Dadurch liegen die Gewindegänge eines Behälters auf den Brücken 26 zwischen den Gewindegängen 13 eines Verschlusses 11 auf und erzeugen eine Schleifwirkung, welche zu einem gebremsten Abschrauben des Verschlusses führt. Je nach Dimensionierung der Brücken 26 kann eine mehr oder weniger starke Bremsfunktion zu unterschiedlichen Phasen der Abschraubbewegung definiert werden. Solange die Gewindegänge eines Behälterfinishs auf allen der Brücken 26 aufliegen, wird der Verschluss aber in der Abschraubbewegung gleichmässig gebremst.

Figur 12 zeigt die Abwicklung eines Behälterfinishs 11, welcher auf seiner Aussenfläche 12 mit einem Aussengewinde versehen ist. Zwischen den Gewindegängen 3 ist ein Vorsprung 27 vorgesehen, welcher einen Anschlag für Ausformungsmerkmale eines Verschlusses bildet. Wenn ein Verschluss aufgrund herrschenden Innendrucks im Behälter axial nach oben gedrückt wird, läuft er beim Abschraubvorgang auf den Vorsprung 27 auf, wodurch die Abschraubbewegung unterbrochen wird. Sobald der Gasdruck im Behälter abgebaut ist, lässt sich der Verschluss nach unten drücken und ermöglicht die Fortsetzung des Abschraubvorgangs.

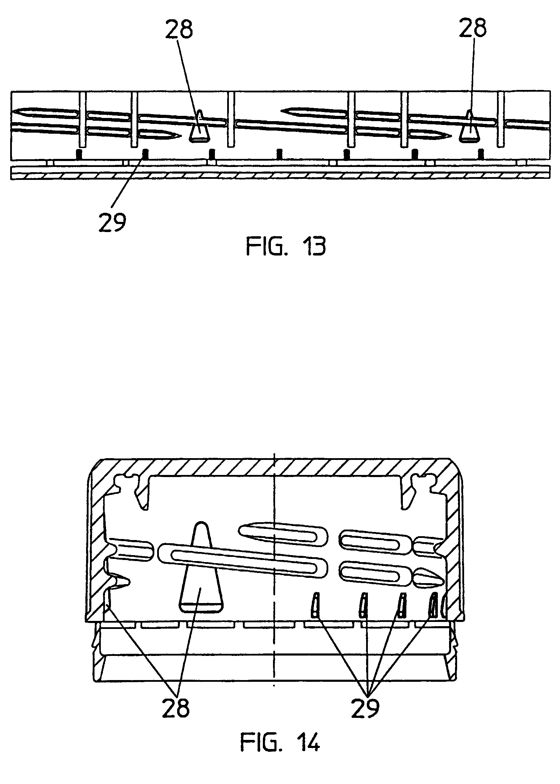

Figuren 13 und 14 zeigen ein Ausführungsbeispiel eines Verschlusses, welcher auf seiner Innenseite mit zwei verschiedenen Vorsprüngen zum gleichmässigen Bremsen der Abschraubbewegung versehen ist. An der Unterkante der Verschlussschürze sind Rippen 29 angeordnet, welche auf dem äusseren Durchmesser einer Behältermündung schleifen und so eine Bremswirkung erzeugen. Im Bereich der Gewindegänge sind ausserdem Vorsprünge 28 vorgesehen, welche ebenfalls eine gleichmässige Bremswirkung des Abschraubvorgangs erzeugen. Die Vorsprünge 28 sowie die Rippen 29 funktionieren selbstverständlich auch für sich alleine.

Die Vorsprünge 28 und die Rippen 29 sind derart ausgebildet, dass sich kein abrupter Stopp der Abschraubbewegung, sondern ein kontinuierliches Bremsen ergibt. Insbesondere ist die Dicke der Vorsprünge 28 und der Rippen 29 in axialer Richtung gegen das untere Ende der Verschlusskappe hin zuwachsend ausgebildet. Die Vorsprünge 28 und die Rippen 29 wachsen aus der Innenfläche der Verschlusskappe hinaus. Mit einem solchen Design wird erreicht, dass am Anfang der Abschraubbewegung die Bremswirkung annähernd Null ist. Durch fortgesetztes Abschrauben des Verschlusses wird der freie Innendurchmesser der Kontaktfläche der Vorsprünge 28 oder der Rippen 29, welche auf einer Aussenfläche des Behälterfinishs schleift, immer kleiner. Dies führt zu einer grösseren Anpresskraft der Vorsprünge 28 oder der Rippen 29 auf die Aussenfläche der Behältermündung und damit zu einer erhöhten Reibungskraft und Bremswirkung.

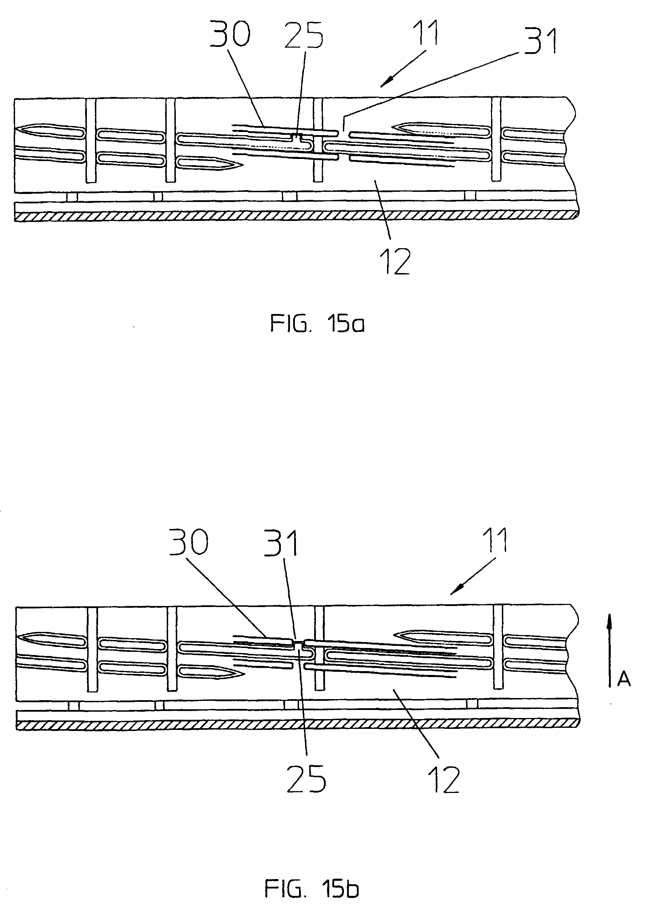

Figur 15a zeigt die Abwicklung der Innenfläche 12 eines Verschlusses 11, welche mit einem Vorsprung 25 versehen ist, der eine Anschlagfläche bildet (siehe auch Figur 10). Andeutungsweise ist ein Gegengewinde 30 an einer Flaschenmündung gezeigt. Das Gewinde 30 weist Unterbrechungen 31 (Lüftungsaussparungen) auf. In Figur 15a steht der Verschluss 11 in einer Stellung auf der Behältermündung, bei welcher die Lüftungsfunktion noch nicht richtig eingesetzt hat. Durch den herrschenden Innendruck im Behälter wird die Verschlusskappe 11 mit ihrem Gewinde 13 gegen die Gewinde 30 der Behältermündung nach oben gepresst.

Figur 15b zeigt den selben Ausschnitt der Abwicklung einer Innenwand 12 einer Verschlusskappe 11, welche gegenüber Figur 15a etwas gedreht, d.h. geöffnet ist. Dabei ist der Vorsprung 25 auf der Oberseite des Gewindegangs 13 der Verschlusskappe 11 in der Entlüftungsaussparung 31 zwischen zwei Teilen der Gewindegänge 30 an der Behältermündung in Eingriff mit den Gewindegängen. Durch den im Inneren des Behälters herrschenden Überdruck wird die Verschlusskappe in axialer Richtung nach oben gedrückt (Pfeil A). Dadurch gerät der Vorsprung 25 mit der Lüftungsaussparung 31, d.h. mit dem Anfang eines Segmentes des Gewindes 30 in Eingriff. Dieser Eingriff bleibt bestehen, solange im Innern des Behälters ein Überdruck herrscht. Während dieser Zeit kann der Überdruck dank der Lüftungsaussparungen in der Verschlusskappe und an der Behältermündung abgebaut werden. Erst wenn der Druck im Innern des Behälters unter einen bestimmten Sollwert gesunken ist, kann die Verschlusskappe 11 wieder nach unten (entgegen dem Pfeil A) gedrückt werden, wobei der Anschlag 25 ausser Eingriff mit den Entlüftungsaussparungen 31 gerät. Nach Herunterdrücken der Verschlusskappe 11 kann der Abschraubvorgang weiter fortgesetzt werden. Selbstverständlich ist es denkbar, eine Behältermündung so auszubilden, dass der Anschlag 25 nicht mit den Aussparungen 31 sondern mit speziell zu diesem Zweck ausgebildeten Gegenanschlägen in Eingriff tritt.

Der Vorteil dieser Anordnung besteht darin, dass die Verschlusskappe erst vollständig von der Behältermündung entfernt werden kann, wenn der Druck im Innern des verschlossenen Behälters vollständig oder nahezu vollständig abgebaut ist.

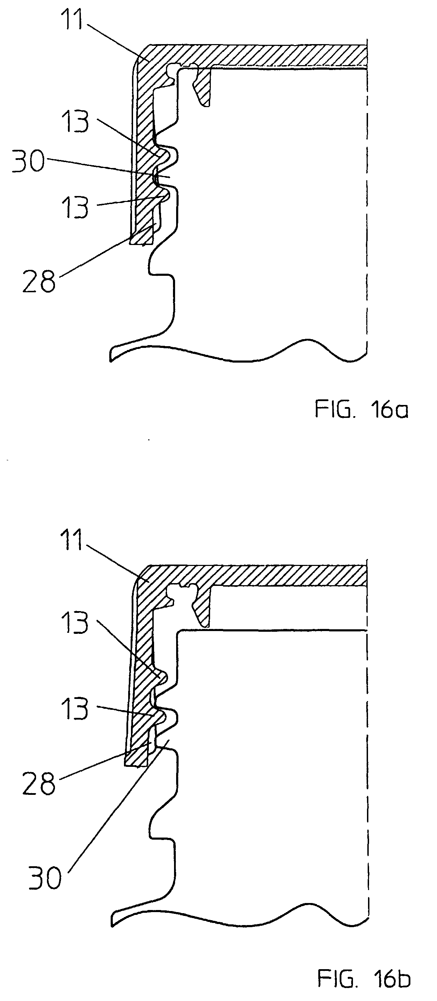

Figuren 16a und 16b zeigen schematisch zwei Etappen des Abschraubvorgangs eines Verschlusses, wie er in Figur 14 gezeigt wurde. Der Verschluss 11 ist auf eine Behältermündung aufgeschraubt und steht mit seinen Gewindegängen 13 in Eingriff mit einem Gegengewinde 30 der Behältermündung. Ein Vorsprung 28 wächst aus der Innenfläche der Verschlusskappe 11 heraus, so dass seine Oberfläche die Oberfläche des Gegengewindes 30 an der Behältermündung berührt. Wie in Figur 16a ersichtlich ist, ist die Anpresswirkung des Vorsprungs 28 bei vollständig aufgesetztem Verschluss noch gering. An derjenigen Stelle, an der der Vorsprung 28 die grösste Dicke aufweist, besteht noch kein Kontakt mit dem Gewinde 30 der Behältermündung. Erst im Laufe des Abschraubvorgangs (siehe Figur 16b) tritt der Vorsprung 28 aufgrund seiner zunehmenden Dicke immer mehr in Eingriff mit dem Gewinde 30 der Behältermündung. Aufgrund der zunehmenden Dicke erhöht sich die Anpresskraft des Vorsprungs 28 auf das Gewinde 30, wodurch die Abschraubbewegung der Verschlusskappe gebremst wird. Es ist wichtig, dass die Entlüftungsfunktion einsetzt, bevor die Aussenseite aufgrund des Vorsprungs (oder der Vorsprünge) 28 allzu stark aufgeweitet wird. Mit den Vorsprüngen 28 wird zwar die Abschraubbewegung gebremst, der Eingriff zwischen Behältermündung und Verschlusskappe ist aber auch (aufgrund des Aufweitens der Kappenwand) geringer. Es ist also wichtig, dass der Innendruck im Behälter abgebaut ist, bevor der Vorsprung 28 voll wirksam wird.

## Patentansprüche

1. Behälterfinish (1) mit einer im wesentlichen zylindrischen Aussenfläche (2) mit zwei radial nach aussen vorstehenden Gewindegängen (3), welche um 180° versetzt an der Aussenfläche (2) angeordnet sind, und mit Entlüftungsaussparungen (4), welche die Gewindegänge (3) unterbrechen, dadurch gekennzeichnet, dass jeder Gewindegang (3) sich über einen Winkel von 240° bis kleiner als 360°, vorzugsweise 340° erstreckt, wobei die beiden Gewindegänge (3) in zwei ersten Abschnitten (5) der Aussenfläche (2) sich vertikal überlappen und wobei in zwei zweiten Abschnitten (6) vertikal nur je ein Gewindegang (3) angeordnet ist, und wobei in jedem der ersten Abschnitte (5) pro Gewindegang (3) wenigstens eine im wesentlichen vertikal mit der Entlüftungsaussparung (4) des anderen Gewindegangs (3) fluchtende Entlüftungsaussparung (4) vorgesehen ist, und wobei in jedem der zweiten Abschnitte (6) wenigstens eine Entlüftungsaussparung (4) vorgesehen ist.

2. Behälterfinish nach Anspruch 1, dadurch gekennzeichnet, dass jeder Gewindegang (3) sich über einen Winkel von 280° erstreckt.

3. Behälterfinish nach einem der Ansprüche 1 oder 2, dadurch gekennzeichnet, dass in jedem ersten Abschnitt (5) und jedem zweiten Abschnitt (6) pro Gewindegang eine Entlüftungsaussparung (4) angebracht ist.

4. Behälterfinish nach einem der Ansprüche 1 bis 3, dadurch gekennzeichnet, dass die Entlüftungsaussparungen (4) in Umfangsrichtung in unregelmässigen Abständen angeordnet sind.

5. Behälterfinish nach einem der Ansprüche 1 bis 4, dadurch gekennzeichnet, dass die Entlüftungsaussparungen sich radial gegen aussen aufweiten, wobei der Aufweitungswinkel zwischen 40° und 70°, vorzugsweise zwischen 55° und 65° beträgt und wobei die Entlüftungsaussparungen (4) sich über einen Winkelbereich von 4° bis 10° erstrecken.

6. Behälterfinish (1) nach einem der Ansprüche 1 bis 5, dadurch gekennzeichnet, dass das Gewinde einen Steigungswinkel (α) von 3° bis 4°, vorzugsweise 3,5° aufweist.

7. Behälterfinish (1) nach einem der Ansprüche 1 bis 6, welcher unterhalb der Gewindegänge (3) einen umlaufenden Rückhaltewulst (7) für ein Garantieband aufweist, dadurch gekennzeichnet, dass die Distanz (d) zwischen der oberen Seite des Rückhaltewulstes (7) und der unteren Seite des Gewindeendes (8) kleiner als die 1,5fache axiale Ausdehnung des Gewindegangs (3) ist.

8. Behälterfinish (1) nach einem der Ansprüche 1 bis 7, dadurch gekennzeichnet, dass der Behälterfinish (1) mit Mitteln (27) zum Bremsen der Abschraubbewegung eines Verschlusses vorgesehen ist.

9. Behälterfinish nach Anspruch 8, dadurch gekennzeichnet, dass die Mittel zum Bremsen der Abschraubbewegung eines Verschlusses aus wenigstens einem zwischen den Gewindegängen (3) angeordneten Vorsprung (27) bestehen, welcher bei erhöhtem Innendruck im Behälter während des Abschraubvorgangs mit Elementen eines Verschlusses in Eingriff bringbar ist.

10. Verschluss (11) mit einem Verschlussboden (20) und einer daran befestigten, umlaufenden Schürze (21) mit einer im wesentlichen zylindrischen Innenfläche (12) mit zwei radial nach innen vorstehenden Gewindegängen (13), welche um 180° versetzt an der Innenfläche (12) angeordnet sind, und mit Entlüftungsaussparungen (14), welche die Gewindegänge (13) unterbrechen, dadurch gekennzeichnet, dass jeder Gewindegang (13) sich über einen Winkel von 240° bis kleiner als 360°, vorzugsweise bis 340° erstreckt, wobei sich die beiden Gewindegänge (13) in zwei ersten Abschnitten (15) der Innenfläche (12) vertikal überlappen und wobei in zwei zweiten Abschnitten (16) vertikal nur je ein Gewindegang (13) angeordnet ist und wobei in jedem ersten Abschnitt (15) pro Gewindegang (13) wenigstens eine im wesentlichen vertikal mit der Entlüftungsaussparung (14) des anderen Gewindegangs (13) fluchtende Entlüftungsaussparung (14) vorgesehen ist und wobei in jedem zweiten Abschnitt (16) wenigstens eine Entlüftungsaussparung (14) vorgesehen ist.

11. Verschluss nach Anspruch 10, dadurch gekennzeichnet, dass jeder Gewindegang (13) sich über einen Winkel von 280° erstreckt.

12. Verschluss nach einem der Ansprüche 10 oder 11, dadurch gekennzeichnet, dass in jedem der ersten Abschnitte (15) jeder Gewindegang (13) durch zwei Entlüftungsaussparungen (14) unterbrochen ist und dass die Gewindegänge (13) in jedem zweiten Abschnitt (15) durch eine Entlüftungsaussparung (14) unterbrochen sind.

13. Verschluss nach einem der Ansprüche 10 bis 12, dadurch gekennzeichnet, dass die Entlüftungsaussparungen (14) in Umfangsrichtung in unregelmässigen Abständen angeordnet sind.

14. Verschluss nach einem der Ansprüche 10 bis 13, dadurch gekennzeichnet, dass jede Entlüftungsaussparung (14) sich über einen Winkelbereich von 4° bis 10°, vorzugsweise 5° erstreckt.

15. Verschluss nach einem der Ansprüche 10 bis 14, dadurch gekennzeichnet, dass der Steigungswinkel (β) der Gewindegänge (13) 3° bis 4°, vorzugsweise 3,5° beträgt.

16. Verschluss nach einem der Ansprüche 10 bis 15, dadurch gekennzeichnet, dass der Verschluss ein Garantieband (17) aufweist, welches über Sollbruchstege (22) mit dem unteren Rand der umlaufenden Schürze (21) verbunden ist.

17. Verschluss nach einem der Ansprüche 10 bis 16, dadurch gekennzeichnet, dass der Verschluss (1) Mittel (25, 26, 28, 29) zum Bremsen der Abschraubbewegung des Verschlusses (1) aufweist.

18. Verschluss nach Anspruch 17, dadurch gekennzeichnet, dass die Mittel als von der Innenfläche des Verschlusses radial nach innen vorstehende Vorsprünge (25, 26, 28, 29) ausgebildet sind.

19. Verschluss nach Anspruch 18, dadurch gekennzeichnet, dass die Vorsprünge (29) benachbart zum unteren Rand der Verschlusskappe angeordnet sind.

20. Verschluss nach Anspruch 18, dadurch gekennzeichnet, dass die Vorsprünge (28) sich im wesentlichen über die ganze Höhe der Gewindegänge (13) des Verschlusses erstrecken.

21. Verschluss nach einem der Ansprüche 18 bis 20, dadurch gekennzeichnet, dass die Vorsprünge (28, 29) in axialer Richtung gegen den Kappenboden hin eine in radialer Richtung abnehmende Dicke aufweisen.

22. Verschluss nach einem der Ansprüche 17 oder 18, dadurch gekennzeichnet, dass die Mittel zum Bremsen als zwischen den Gewindegängen (13) angeordnete Brücken (26) ausgebildet sind.

23. Verschluss nach einem der Ansprüche 17 oder 18, dadurch gekennzeichnet, dass die Vorsprünge aus zwischen den Gewindegängen (13) angebrachten Vorsprüngen (25) bestehen, die während des Abschraubvorgangs bei erhöhtem Innendruck im durch den Verschluss verschlossenen Behälter mit Elementen des Behälters in Eingriff bringbar sind.

24. Verschlussanordnung mit einem Behälterfinish (1) und einer Verschlusskappe (11) zum Verschliessen eines Behälters (1a), wobei der Behälterfinish (1) eine im wesentlichen zylindrische Aussenfläche (2) mit zwei radial nach aussen vorstehenden Gewindegängen (3), welche um 180° versetzt an der Aussenfläche (2) angeordnet sind und Entlüftungsaussparungen (4), die die Gewindegänge (3) unterbrechen, aufweist und wobei der Verschluss (11) einen Verschlussboden (20) und eine daran befestigte, umlaufende Schürze (21) mit einer im wesentlichen zylindrischen Innenfläche (12), an welcher zwei radial nach innen vorstehende, um 180° versetzte Gewindegänge (13) angeordnet sind, und Entlüftungsaussparungen (14) aufweist, welche die Gewindegänge (13) unterbrechen, wobei die Gewindegänge (13) des Verschlusses (11) mit den Gewindegängen (3) des Behälterfinish (1) in Eingriff bringbar sind, dadurch gekennzeichnet, dass jeder Gewindegang (3) des Behälterfinish (1) und jeder Gewindegang (13) des Verschlusses (11) sich über einen Winkel von 240° bis kleiner als 360°, vorzugsweise bis 340° erstreckt, wobei sich die beiden Gewindegänge (3) des Behälterfinish (1) in zwei ersten Abschnitten (5) der Aussenfläche (2) des Behälterfinish (1) vertikal überlappen und wobei in zwei zweiten Abschnitten (6) der Aussenfläche (2) des Behälterfinish (1) vertikal nur je ein Gewindegang (3) angeordnet ist, und wobei sich die beiden Gewindegänge (13) des Verschlusses (11) in zwei ersten Abschnitten (15) der Innenfläche (12) vertikal überlappen und wobei in zwei zweiten Abschnitten (16) der Innenfläche (12) vertikal nur je ein Gewindegang (13) angeordnet ist, und wobei in jedem der ersten Abschnitte (5) der Aussenfläche (2) des Behälterfinish (1) pro Gewindegang (3) wenigstens eine in wesentlichen vertikal mit der Entlüftungsaussparung (4) des anderen Gewindegangs (3) fluchtende Entlüftungsaussparung (4) und in jedem der zweiten Abschnitte (6) wenigstens eine Entlüftungsaussparung (4) vorgesehen sind, und wobei in jedem der ersten Abschnitte (15) der Innenfläche (12) des Verschlusses (11) pro Gewindegang (13) wenigstens eine im wesentlichen vertikal mit der Entlüftungsaussparung (14) des anderen Gewindegangs (13) fluchtende Entlüftungsaussparung (14) und in jedem der zweiten Abschnitte (16) wenigstens eine Entlüftungsaussparung (14) vorgesehen sind.

25. Verschlussanordnung nach Anspruch 24, dadurch gekennzeichnet, dass die Gewindegänge (3, 13) sich über einen Winkel von je 280° erstrecken.

26. Verschlussanordnung nach einem der Ansprüche 24 oder 25, dadurch gekennzeichnet, dass pro Gewindegang (3, 13) in den zweiten Abschnitten (6, 16) der Aussenfläche (2) des Behälterfinish (1) und der Innenfläche (12) des Verschlusses (11) genau je eine Entlüftungsaussparung (4, 14) vorgesehen ist, dass in den ersten Abschnitten (5) des Behälterfinish (1) pro Gewindegang (3) eine Entlüftungsaussparung (4) vorgesehen ist, und dass in den ersten Abschnitten (15) des Verschlusses (11) pro Gewindegang (13) zwei Entlüftungsaussparungen (14) angeordnet sind.

27. Verschlussanordnung nach einem der Ansprüche 24 bis 26, dadurch gekennzeichnet, dass die Entlüftungsaussparungen (3) auf der Aussenfläche (12) des Behälterfinish (1) und die Entlüftungsaussparungen (13) auf der Innenfläche (12) des Verschlusses (11) je in Umfangrichtung mit gegenseitig unterschiedlichen Abständen angeordnet sind.

28. Verschlussanordnung nach einem der Ansprüche 24 bis 27, dadurch gekennzeichnet, dass die Steigungen der Gewindegänge (3, 13) 3° bis 4°, vorzugsweise 3,5° betragen.

29. Verschlussanordnung nach einem der Ansprüche 24 bis 28, dadurch gekennzeichnet, dass der Verschluss (11) mit dem Behälterfinish (1) über einen Winkelbereich von 300° bis 390°, vorzugsweise 360° in Eingriff steht.

30. Verschlussanordnung nach einem der Ansprüche 24 bis 29, dadurch gekennzeichnet, dass die Gewindeeinläufe (9) der Gewindegänge (3) durch eine vertikale Kante (24) begrenzt sind, welche mit einem Bremselement auf der Innenfläche (12) des Verschlusses (11) in Eingriff bringbar ist.

31. Verschlussanordnung nach einem der Ansprüche 24 bis 30, bei welchem zwischen der oberen Kante der Gewindegänge (3) des Behälterfinish (1) und dem oberen Rand (10) des Behälterfinish (1) eine Distanz (d2) gebildet ist und bei welcher zwischen der dem Kappenboden (20) zugewandten Seite des Gewindeendes (19) des Gewindegangs (13) und dem Kappenboden eine Distanz (d1) gebildet ist, dadurch gekennzeichnet, dass die Distanz (d1) grösser als die Distanz (d2) ist.

## Claims

1. A container finish (1) with a substantially cylindrical outside surface (2) with two radially outwardly projecting screwthread pitches (3) which are arranged displaced through 180° on the outside surface (2) and with venting openings (4) which interrupt the screwthread pitches (3), characterised in that each screwthread pitch (3) extends over an angle of 240° to less than 360°, preferably 340°, wherein the two screwthread pitches (3) vertically overlap each other in two first portions (5) of the outside surface (2) and wherein only one respective screwthread pitch (3) is arranged vertically in each of two second portions (6) and wherein provided in each of the first portions (5) for each screwthread pitch (3) is at least one venting opening (4) which is substantially vertically aligned with the venting opening (4) of the other screwthread pitch (3) and wherein at least one venting opening (4) is provided in each of the second portions (6).

2. A container finish according to claim 1 characterised in that each screwthread pitch (3) extends over an angle of 280°.

3. A container finish according to one of claims 1 and 2 characterised in that one venting opening (4) is provided for each screwthread pitch in each first portion (5) and each second portion (6).

4. A container finish according to one of claims 1 to 3 characterised in that the venting openings (4) are arranged at irregular spacings in the peripheral direction.

5. A container finish according to one of claims 1 to 4 characterised in that the venting openings expand radially outwardly, wherein the expansion angle is between 40° and 70°, preferably between 55° and 65°. and wherein the venting openings (4) extend over an angular region of 4° to 10°.

6. A container finish (1) according to one of claims 1 to 5 characterised in that the screwthread has a pitch angle (α) of 3° to 4°, preferably 3.5°.

7. A container finish (1) according to one of claims 1 to 6 which beneath the screwthread pitches (3) has a peripherally extending retaining bead (7) for an anti-tamper band, characterised in that the distance (d) between the upper side of the retaining bead (7) and the lower side of the screwthread end (8) is less than 1.5 times the axial extent of the screwthread pitch (3).

8. A container finish (1) according to one of claims 1 to 7 characterised in that the container finish (1) is provided with means (27) for braking the unscrewing movement of a closure.

9. A container finish according to claim 8 characterised in that the means for braking the unscrewing movement of a closure comprise at least one projection (27) which is arranged between the screwthread pitches (3) and which in the event of an increased internal pressure in the container can be brought into engagement during the unscrewing operation with elements of a closure.

10. A closure (11) having a closure end portion (20) and a peripherally extending skirt (21) secured thereto with a substantially cylindrical inside surface (12) with two radially inwardly projecting screwthread pitches (13) which are arranged displaced through 180° on the inside surface (12) and with venting openings (14) which interrupt the screwthread pitches (13), characterised in that each screwthread pitch (13) extends over an angle of 240° to less than 360°, preferably to 340°, wherein the two screwthread pitches (13) vertically overlap each other in two first portions (15) of the inside surface (12) and wherein only one respective screwthread pitch (13) is arranged vertically in each of two second portions (16) and wherein provided in each first portion (15) for each screwthread pitch (13) is at least one venting opening (14) which is substantially vertically aligned with the venting opening (14) of the other screwthread pitch (13) and wherein at least one venting opening (14) is provided in each of the second portions (16).

11. A closure according to claim 10 characterised in that each screwthread pitch (13) extends over an angle of 280°.

12. A closure according to one of claims 10 and 11 characterised in that in each of the first portions (15) each screwthread pitch (13) is interrupted by two venting openings (14) and that the screwthread pitches (13) in each second portion (15) are interrupted by a venting opening (14).

13. A closure according to one of claims 10 to 12 characterised in that the venting openings (14) are arranged at irregular spacings in the peripheral direction.

14. A closure according to one of claims 10 to 13 characterised in that each venting opening (14) extends over an angular region of 4° to 10°. preferably 5°.

15. A closure according to one of claims 10 to 14 characterised in that the pitch angle (β) of the screwthread pitches (13) is 3° to 4°, preferably 3.5°.

16. A closure according to one of claims 10 to 15 characterised in that the closure has an anti-tamper band (17) which is connected to the lower edge of the peripherally extending skirt (21) by way of desired-rupture legs (22).

17. A closure according to one of claims 10 to 16 characterised in that the closure (1) has means (25, 26, 28, 29) for braking the unscrewing movement of the closure (1).

18. A closure according to claim 17 characterised in that the means are in the form of projections (25. 26, 28, 29) projecting radially inwardly from the inside surface of the closure.

19. A closure according to claim 18 characterised in that the projections (29) are arranged adjacent to the lower edge of the closure cap.

20. A closure according to claim 18 characterised in that the projections (28) extend substantially over the entire height of the screwthread pitches (13) of the closure.

21. A closure according to one of claims 18 to 20 characterised in that the projections (28, 29) are of a thickness which decreases in a radial direction, in an axial direction towards the cap end portion.

22. A closure according to one of claims 17 and 18 characterised in that the braking means are in the form of bridges (26) arranged between the screwthread pitches (13).

23. A closure according to one of claims 17 and 18 characterised in that the projections comprise projections (25) which are disposed between the screwthread pitches (13) and which during the unscrewing operation in the event of an increased internal pressure in the container closed by the closure can be brought into engagement with elements of the container.

24. A closure arrangement having a container finish (1) and a closure cap (11) for closing a container (1a) wherein the container finish (1) has a substantially cylindrical outside surface (2) with two radially outwardly projecting screwthread pitches (3) which are arranged displaced through 180° on the outside surface (2) and venting openings (4) which interrupt the screwthread pitches (3), and wherein the closure (11) has a closure end portion (20) and a peripherally extending skirt (21) secured thereto with a substantially cylindrical inside surface (12) on which are arranged two radially inwardly projecting screwthread pitches (13) displaced through 180°, and venting openings (14) which interrupt the screwthread pitches (13). wherein the screwthread pitches (13) of the closure (11) can be brought into engagement with the screwthread pitches (3) of the container finish (1), characterised in that each screwthread pitch (3) of the container finish (1) and each screwthread pitch (13) of the closure (11) extends over an angle of 240° to less than 360°, preferably to 340°, wherein the two screwthread pitches (3) of the container finish (1) vertically overlap in two first portions (5) of the outside surface (2) of the container finish (1) and wherein only one respective screwthread pitch (3) is arranged vertically in each of two second portions (6) of the outside surface (2) of the container finish (1) and wherein the two screwthread pitches (13) of the closure (11) vertically overlap in two first portions (15) of the inside surface (12) and wherein only one respective screwthread pitch (13) is arranged vertically in each of two second portions (16) of the inside surface (12) and wherein provided in each of the first portions (5) of the outside surface (2) of the container finish (1) for each screwthread pitch (3) is at least one venting opening (4) which is substantially vertically aligned with the venting opening (4) of the other screwthread pitch (3) and wherein at least one venting opening (4) is provided in each of the second portions (6) and wherein provided in each of the first portions (15) of the inside surface (12) of the closure (11) for each screwthread pitch (13) is at least one venting opening (14) which is substantially vertically aligned with the venting opening (14) of the other screwthread pitch (13) and at least one venting opening (14) is provided in each of the second portions (16).

25. A closure arrangement according to claim 24 characterised in that the screwthread pitches (3, 13) each extend over an angle of 280°.

26. A closure arrangement according to one of claims 24 and 25 characterised in that there is provided precisely one respective venting opening (4. 14) for each screwthread pitch (3, 13) in each of the second portions (6, 16) of the outside surface (2) of the container finish (1) and the inside surface (12) of the closure (11), that a venting opening (4) is provided for each screwthread pitch (3) in the first portions (5) of the container finish (1) and that two venting openings (14) are arranged in the first portions (5) of the closure (11) for each screwthread pitch (13).

27. A closure arrangement according to one of claims 24 to 26 characterised in that the venting openings (3) on the outside surface (12) of the container finish (1) and the venting openings (13) on the inside surface (12) of the closure (11) are respectively arranged at mutually different spacings in the peripheral direction.

28. A closure arrangement according to one of claims 24 to 27 characterised in that the pitch angles of the screwthread pitches (3, 13) are 3° to 4°, preferably 3.5°.

29. A closure arrangement according to one of claims 24 to 28 characterised in that the closure (11) is in engagement with the container finish (1) over an angular region of 300° to 390°, preferably 360°.

30. A closure arrangement according to one of claims 24 to 29 characterised in that the screwthread entries (9) of the screwthread pitches (3) are delimited by a vertical edge (24) which can be brought into engagement with a braking element on the inside surface (12) of the closure (11).

31. A closure arrangement according to one of claims 24 to 30 wherein a distance (d2) is formed between the upper edge of the screwthread pitches (3) of the container finish (1) and the upper edge (10) of the container finish (1) and wherein a distance (d1) is formed between the cap end portion (20) and the side, which is towards the cap end portion. of the screwthread end (19) of the screwthread pitch (13). characterised in that the distance (d1) is larger than the distance (d2).

## Revendications

1. Goulot de récipient (1) comportant une surface extérieure (2) globalement cylindrique pourvue de deux filets (3) qui font saillie radialement vers l'extérieur et qui sont disposés sur ladite surface extérieure (2) en étant décalés de 180°, et d'évidements d'évacuation d'air (4) qui interrompent les filets (3), caractérisé en ce que chaque filet (3) s'étend sur un angle de 240° à moins de 360°, de préférence de 340°, étant précisé que les deux filets (3) se recouvrent verticalement dans deux premières sections (5) de la surface extérieure (2) tandis que dans chacune des deux secondes sections (6), un seul filet (3) est disposé à la verticale, que dans chacune des premières sections (5), il est prévu pour chaque filet (3) au moins un évidement d'évacuation d'air (4) situé globalement dans l'alignement vertical de l'évidement d'évacuation d'air (4) de l'autre filet (3), et que dans chacune des secondes sections (6), il est prévu au moins un évidement d'évacuation d'air (4).

2. Goulot de récipient selon la revendication 1, caractérisé en ce que chaque filet (3) s'étend sur un angle de 280°.

3. Goulot de récipient selon la revendication 1 ou 2, caractérisé en ce que dans chaque première section (5) et dans chaque seconde section (6), il est prévu pour chaque filet (3) un évidement d'évacuation d'air (4).

4. Goulot de récipient selon l'une des revendications 1 à 3, caractérisé en ce que les évidements d'évacuation d'air (4) sont disposés à intervalles irréguliers dans le sens circonférenciel.

5. Goulot de récipient selon l'une des revendications 1 à 4, caractérisé en ce que les évidements d'évacuation d'air s'élargissent radialement vers l'extérieur, l'angle d'élargissement étant situé entre 40° et 70°, de préférence entre 55° et 65°, et les évidements d'évacuation d'air (4) s'étendant sur une zone angulaire de 4° à 10°.

6. Goulot de récipient (1) selon l'une des revendications 1 à 5, caractérisé en ce que le filetage présente un angle d'inclinaison (α) de 3° à 4°, de préférence de 3,5°.

7. Goulot de récipient (1) selon l'une des revendications 1 à 6, qui présente au-dessous des filets (3) un renflement de retenue circulaire (7) pour une bande de garantie, caractérisé en ce que l'écartement (d) entre le côté supérieur du renflement de retenue (7) et le côté inférieur de l'extrémité de filet (8) est inférieur à 1,5 fois l'extension axiale du filet (3).

8. Goulot de récipient (1) selon l'une des revendications 1 à 7, caractérisé en ce qu'il est pourvu de moyens (27) pour freiner le mouvement de dévissage d'un couvercle.

9. Goulot de récipient selon la revendication 8, caractérisé en ce que les moyens pour freiner le mouvement de dévissage d'un couvercle se composent d'au moins une saillie (27) qui est disposée entre les filets (3) et qui, en présence d'une pression interne accrue dans le récipient, est apte à venir en prise avec des éléments d'un couvercle pendant le dévissage.

10. Couvercle (11) comprenant un fond (20) et une jupe circulaire (21) qui est fixée à celui-ci et qui présente une surface intérieure (12) globalement cylindrique pourvue de deux filets (13) saillant radialement vers l'intérieur et disposés sur la surface intérieure (12) en étant décalés de 180°, et d'évidements d'évacuation d'air (14) qui interrompent les filets (13), caractérisé en ce que chaque filet (13) s'étend sur un angle de 240° à moins de 360°, de préférence à 340°, étant précisé que les deux filets (13) se recouvrent verticalement dans deux premières sections (15) de la surface extérieure (12) tandis que dans deux secondes sections (16), un seul filet (13) est disposé à la verticale, que dans chaque première section (15), il est prévu pour chaque filet (13) au moins un évidement d'évacuation d'air (14) situé globalement dans l'alignement vertical de l'évidement d'évacuation d'air (14) de l'autre filet (13), et que dans chaque seconde section (16), il est prévu au moins un évidement d'évacuation d'air (14).

11. Couvercle selon la revendication 10, caractérisé en ce que chaque filet (13) s'étend sur un angle de 280°.

12. Couvercle selon la revendication 10 ou 11, caractérisé en ce que dans chacune des premières sections (15), chaque filet (13) est interrompu par deux évidements d'évacuation d'air (14) et en ce que les filets (13) sont interrompus dans chaque seconde section (15) par un évidement d'évacuation d'air (14).

13. Couvercle selon l'une des revendications 10 à 12, caractérisé en ce que les évidements d'évacuation d'air (14) sont disposés à intervalles irréguliers dans le sens circonférenciel.

14. Couvercle selon l'une des revendications 10 à 13, caractérisé en ce que chaque évidement d'évacuation d'air (14) s'étend sur une zone angulaire de 4° à 10°, de préférence de 5°.

15. Couvercle selon l'une des revendications 10 à 14, caractérisé en ce que l'angle d'inclinaison (β) des filets (13) est de 3° à 4°, de préférence de 3,5°.

16. Couvercle selon l'une des revendications 10 à 15, caractérisé en ce que le couvercle présente une bande de garantie (17) qui est reliée au bord inférieur de la jupe circulaire (21) par des pattes de rupture (22).

17. Couvercle (1) selon l'une des revendications 10 à 16, caractérisé en ce qu'il comporte des moyens (25, 26, 28, 29) pour freiner son mouvement de dévissage.

18. Couvercle selon la revendication 17, caractérisé en ce que lesdits moyens sont conçus comme des saillies (25, 26, 28, 29) saillant radialement vers l'intérieur à partir de la surface intérieure du couvercle.

19. Couvercle selon la revendication 18, caractérisé en ce que les saillies (29) sont voisines du bord inférieur du couvercle.

20. Couvercle selon la revendication 18, caractérisé en ce que les saillies (28) s'étendent globalement sur toute la hauteur des filets (13) du couvercle.

21. Couvercle selon l'une des revendications 18 à 20, caractérisé en ce que les saillies (28, 29) présentent en direction du fond de couvercle, dans le sens axial, une épaisseur qui va en diminuant dans le sens radial.

22. Couvercle selon la revendication 17 ou 18, caractérisé en ce que les moyens de freinage sont conçus comme des ponts (26) disposés entre les filets (13).

23. Couvercle selon la revendication 17 ou 18, caractérisé en ce que les saillies se composent de saillies (25) qui sont prévues entre les filets (13) et qui, lors du dévissage, sont aptes à venir en prise avec des éléments du récipient, en présence d'une pression interne accrue dans le récipient fermé par le couvercle.

24. Dispositif de fermeture comprenant un goulot de récipient (1) et un couvercle (11) pour fermer un récipient (1a), étant précisé que le goulot de récipient (1) comporte une surface extérieure (2) globalement cylindrique pourvue de deux filets (3) qui font saillie radialement vers l'extérieur et qui sont disposés sur ladite surface extérieure (2) en étant décalés de 180°, et d'évidements d'évacuation d'air (4) qui interrompent les filets (3), tandis que le couvercle (11) comprend un fond (20) et une jupe circulaire (21) fixée à celui-ci et présentant une surface intérieure (12) globalement cylindrique sur laquelle sont disposés deux filets (13) saillant radialement vers l'intérieur et décalés de 180°, ainsi que des évidements d'évacuation d'air (14) qui interrompent les filets (13), les filets (13) du couvercle (11) étant aptes à venir en prise avec les filets (3) du goulot de récipient (1), caractérisé en ce que chaque filet (3) du goulot de récipient (1) et chaque filet (13) du goulot (11) s'étendent sur un angle de 240° à moins de 360°, de préférence à 340°, étant précisé que les deux filets (3) du goulot de récipient (1) se recouvrent verticalement dans deux premières sections (5) de la surface extérieure (2) du goulot (1) tandis que dans deux secondes sections (6) de la surface extérieure (2) du goulot (1), un seul filet (3) est disposé verticalement, étant précisé également que les deux filets (13) du couvercle (11) se recouvrent verticalement dans deux premières sections (15) de la surface intérieure (12) tandis que dans deux secondes sections (16) de la surface intérieure (12), un seul filet (13) est disposé verticalement, étant précisé encore que dans chacune des premières sections (5) de la surface extérieure (2) du goulot de récipient (1), il est prévu pour chaque filet (3) au moins un évidement d'évacuation d'air (4) qui est situé globalement dans l'alignement vertical de l'évidement d'évacuation d'air (4) de l'autre filet (3), tandis qu'il est prévu dans chacune des secondes sections (6) au moins un évidement d'évacuation d'air (4), et étant précisé enfin que dans chacune des premières sections (15) de la surface intérieure (12) du couvercle (11), il est prévu pour chaque filet (13) au moins un évidement d'évacuation d'air (14) qui est situé globalement dans l'alignement vertical de l'évidement d'évacuation d'air (14) de l'autre filet (13), tandis qu'il est prévu dans chacune des secondes sections (16) au moins un évidement d'évacuation d'air (14).

25. Dispositif de fermeture selon la revendication 24, caractérisé en ce que les filets (3, 13) s'étendent chacun sur un angle de 280°.

26. Dispositif de fermeture selon la revendication 24 ou 25, caractérisé en ce qu'il est prévu exactement un évidement d'évacuation d'air (4, 14) pour chaque filet (3, 13) dans les secondes sections (6, 16) de la surface extérieure (2) du goulot de récipient (1) et de la surface intérieure (12) du couvercle (11), en ce que dans les premières sections (5) du goulot de récipient (1), il est prévu un évidement d'évacuation d'air (4) pour chaque filet (3), et en ce que dans les premières sections (15) du couvercle (11), il est prévu deux évidements d'évacuation d'air (14) pour chaque filet (13).

27. Dispositif de fermeture selon l'une des revendications 24 à 26, caractérisé en ce que les évidements d'évacuation d'air (4) prévus sur la surface extérieure (2) du goulot de récipient (1) et les évidements d'évacuation d'air (14) prévus sur la surface intérieure (12) du couvercle (11) sont disposés avec des espacements différents dans le sens circonférenciel.

28. Dispositif de fermeture selon l'une des revendications 24 à 27, caractérisé en ce que les inclinaisons des filets (3, 13) sont de 3° à 4°, de préférence de 3,5°.

29. Dispositif de fermeture selon l'une des revendications 24 à 28, caractérisé en ce que le couvercle (11) est en prise avec le goulot de récipient (1) sur une zone angulaire de 300° à 390°, de préférence de 360°.

30. Dispositif de fermeture selon l'une des revendications 24 à 29, caractérisé en ce que les entrées (9) des filetages (3) sont limitées par une arête verticale (24) qui est apte à venir en prise avec un élément de freinage prévu sur la surface intérieure (12) du couvercle (11).

31. Dispositif de fermeture selon l'une des revendications 24 à 30, dans lequel un écartement (d2) est défini entre l'arête supérieure des filetages (3) du goulot de récipient (1) et le bord supérieur (10) dudit goulot (1), et dans lequel un écartement (d1) est défini entre le côté de la fin (19) du filet (13) tourné vers le fond de couvercle (20) et ce dernier, caractérisé en ce que l'écartement (d1) est supérieur à l'écartement (d2).
